# EUROPÄISCHE PATENTANMELDUNG

(11) **EP 3 432 185 A1**
(43) Veröffentlichungstag der Anmeldung: **23.01.2019**
(21) Anmeldenummer: 17182107.7
(22) Anmeldetag: 19.07.2017
(51) Int. Cl.: G06F 21/55, H04L 9/08

(54) **VERFAHREN UND NETZWERKEINRICHTUNG ZUM SCHUTZ GEGEN MANIPULATIONEN EINES ZUMINDEST EINEN ERSTEN GEMÄSS ASYMMETRISCHEM VERSCHLÜSSELUNGSVERFAHREN ZUR VERSCHLÜSSELTEN KOMMUNIKATION UND/ODER AUTHENTISIERUNG ERZEUGTEN SCHLÜSSELPAAR NUTZENDEN GERÄTES**

(71) Anmelder: Siemens Aktiengesellschaft, 80333 München (DE)
(72) Erfinder: Falk, Rainer, 85586 Poing (DE)

(57) **Zusammenfassung**

Die Erfindung betrifft ein Verfahren zum Schutz gegen Manipulationen eines zumindest einen ersten gemäß asymmetrischem Verschlüsselungsverfahren zur verschlüsselten Kommunikation und/oder Authentisierung erzeugten Schlüsselpaar nutzenden Gerätes, wird das Gerät funktional mit mindestens einer Einrichtung zur Erfassung eines Manipulationsversuchs verbunden ist und betrieben und das Gerät ersetzt bei Erfassen eines Manipulationsversuchs, zumindest einen Schlüssel, insbesondere der öffentliche Schlüssel, des ersten Schlüsselpaares durch einen neuen Schlüssel. Ferner betrifft die Erfindung eine Netzwerkeinrichtung zur Durchführung des Verfahrens.

## Beschreibung

Die Erfindung betrifft ein Verfahren zum Schutz gegen Manipulationen eines zumindest ein erstes gemäß asymmetrischem Verschlüsselungsverfahren zur verschlüsselten Kommunikation und/oder Authentisierung erzeugtes Schlüsselpaar nutzenden Gerätes gemäß Anspruch 1 sowie eine Netzwerkeinrichtung zum Schutz gegen Manipulationen eines zumindest ein erstes gemäß asymmetrischem Verschlüsselungsverfahren zur verschlüsselten Kommunikation und/oder Authentisierung erzeugtes Schlüsselpaar nutzenden Gerätes gemäß Anspruch 10.

Eingebettete Systeme, wie beispielsweise ein "Internet of Things"(IoT)-Gerät, Steuergerät, Feldgerät, sind häufig in leicht zugänglichen Bereichen installiert, sodass lokale physikalische Angriffen möglich sind. Angriffe im Sinne dieser Offenbarung umfasst alle unter dem aus dem Englischen bekannten und im Folgenden verwendeten Begriff "Tamper" fallenden Ereignissen wie den Eingriff unberechtigter Dritter, zum Zwecke der Manipulation, etwa um unberechtigt an Daten zu gelangen, Verfälschungen von Daten oder Funktionen, sowie Sabotage bis hin zur Zerstörung. Um solche Manipulationen zu verhindern, besteht ein Bedarf an einem Tamper-Schutz für eingebettete Systeme.

Hierzu ist es bekannt, ein Gerät durch Tamper-Sensoren, wie Gehäuseschalter oder eine Bohrschutzfolie zu schützen. Schlagen diese Sensoren an, d. h. wird ein Manipulationsvorgang, also ein Tampering, erkannt, wird, insbesondere wenn es sich um industrielle Feldgeräte handelt, ein Tampering gemeldet.

Ein Melden von Tampering ist beispielsweise aus der US8984641 bekannt. Nachteilig dabei ist, dass bis zum Ergreifen von Maßnahmen, die Manipulation fortgesetzt werden kann.

Ein Weg dies zu vermeiden besteht darin, ein Gerät beispielsweise mit Epoxydharz zu vergießen. Ein solcher physikalischer Tamper-Schutz wird üblicherweise nur bei speziellen Hardware-Sicherheitsmodulen (HSM) verwendet. Nach einem Tampering ist das HSM nicht mehr nutzbar, d.h. es wird dauerhaft gesperrt und muss entsorgt werden.

Eine weitere Möglichkeit hierzu besteht darin, dass kryptographische Schlüssel gelöscht und gegebenenfalls zusätzlich ein diese Detektion vermeldendes Tamper-Signal bereitgestellt werden, so dass zu einem späteren Zeitpunkt eine erneute Inbetriebnahme durchgeführt werden kann. Doch auch dieser Ansatz führt zu einem Ausfall.

Die der Erfindung zugrunde liegende Aufgabe besteht darin eine Lösung aufzuzeigen, die einen demgegenüber verbesserten Tamper-Schutz bietet.

Diese Aufgabe wird durch das Verfahren ausgehend vom Oberbegriff des Anspruchs 1 durch dessen kennzeichnende Merkmale, sowie durch die Netzwerkeinrichtung ausgehende vom Oberbegriff des Anspruchs 10 durch dessen kennzeichnende Merkmale, gelöst.

Bei dem erfindungsgemäßen Verfahren zum Schutz gegen Manipulationen eines zumindest ein erstes gemäß asymmetrischem Verschlüsselungsverfahren zur verschlüsselten Kommunikation und/oder Authentisierung erzeugtes Schlüsselpaar nutzenden Gerätes, wird das Gerät funktional mit mindestens einer Einrichtung zur Erfassung eines Manipulationsversuchs verbunden und betrieben und das Gerät ersetzt bei Erfassen eines Manipulationsversuchs zumindest einen Schlüssel, insbesondere den privaten Schlüssel, des ersten Schlüsselpaares durch einen neuen Schlüssel. Alternativ kann der öffentliche Schlüssel ersetzt werden. Vorzugsweise werden beide Schlüssel des Schlüsselpaares ersetzt.

Hierdurch wird es möglich, die Funktionalität des Gerätes derart einzuschränken, dass hinsichtlich der Sicherheit, insbesondere des Netzwerks, relevante Funktionen ab Erfassen einer Manipulation nicht mehr möglich sind, jedoch Funktionen, die diesbezüglich nicht relevant sind, aber für das Netzwerk und/oder das Gerät, beispielsweise für die Reintegration oder Auswertung des Angriffs nützlich sind, weitergeführt werden können.

Die Erfindung betrifft weiterhin eine Netzwerkeinrichtung, insbesondere in der Art des "Internet of Things", vorzugsweise als Feldgerät, Steuergerät, intelligenter Sensor, intelligenter Aktuator, Erweiterungsmodul, Ansteckmodul oder CPU-Modul, die Mittel zur Durchführung des Verfahrens und/oder seiner Weiterbildungen aufweist.

Die Netzwerkeinrichtung ermöglicht durch die Implementierung des Verfahrens und/oder dessen Weiterbildungen die Verwirklichung der hierzu genannten Vorteile.

Weitere vorteilhafte Ausführungsformen der Erfindung sind durch die Unteransprüche angegeben.

Gemäß einer Weiterbildung wird der neue Schlüssel als Eintrag, insbesondere als Audit-Log-Eintrag oder Konfigurationsspeichereintrag, im Gerät gespeichert vorgehalten und bei Erfassen des Manipulationsversuches ausgelesen bzw. aktiviert. Hierdurch ist der Schlüssel sofort verfügbar und zudem einsetzbar, wenn eine Generierung des/der Schlüssel auf dem Gerät nicht angedacht ist oder zu einer unzulässigen Verzögerung führen würde.

Bevorzugt wird dieser Eintrag mit dem ersten Schlüsselpaar digital signiert gespeichert. Hierdurch wird gewährleistet, dass die Schlüsselbereitstellung durch einen Berechtigten erfolgt ist.

Alternativ oder ergänzend besteht eine Weiterbildung darin, dass der neue Schlüssel bei Erfassen des Manipulationsversuches generiert wird. Dies hat insbesondere den Vorteil, dass kein Speichern zukünftiger Schlüssel in einem sicheren Bereich notwendig ist, so dass auf einen derartigen Bereich verzichtet werden kann.

Die Erfindung kann ferner derart weitergebildet sein, dass die Einrichtung als Sensor, insbesondere Gehäuseschalter, Strahlungssensor, Näherungssensor, Berührungssensor, Erschütterungssensor, Eindringsensor und/oder Bohrschutzfolie, betrieben wird. Dies wird vor Allem zur Detektion mechanischer Einwirkung von Vorteil sein.

Alternativ oder ergänzend wird das erfindungsgemäße Verfahren derart weitergebildet, dass die Einrichtung als Überwachung mindestens einer Mensch-Maschine-Schnittstelle, insbesondere Taste oder Schalter, vorzugsweise, mit besonderer Funktion wie Lösch- oder Rücksetztaste, Betriebsartenstecker, Betriebsartenschalter und/oder Kommandointerpreter, betrieben wird. Hierdurch können Manipulationen dadurch erkannt werden, dass grundsätzlich mögliche Betätigungen bzw. Benutzungen des Gerätes zu einem unzulässigen Zeitpunkt erfolgen.

Verfahren nach einem der vorhergehenden Ansprüche, dadurch gekennzeichnet, dass als Einrichtung eine Integrität von mit der Gerätefunktion korrelierenden Größen, insbesondere von Daten, wie Konfigurationsdaten, Programmcode, und/oder von Laufzeiten, wie Prozess- und/oder Tasklaufzeiten, verifiziert.

Eine weitere alternative oder ergänzende Weiterbildung des erfindungsgemäßen Verfahrens besteht darin, dass die Schlüssel in einer, insbesondere nach Art eines Secure-Element, zugriffssicheren zumindest temporär in dem Gerät integrierten Einrichtung gespeichert werden. Hierdurch werden vorgehaltene Schlüssel, insbesondere unabhängig von anderen Teilen des Gerätes, gesichert und somit ein Korrumpieren dieser Schlüssel zumindest erschwert.

Werden, wie bei der Weiterbildung des erfindungsgemäßen Verfahrens, die Schlüssel des ersten und/oder neuen Schlüsselpaares gemäß einem "Rivest, Shamir und Adleman" - RSA, "Digital Signature Algorithm" - DSA, "Elliptic Curve Digital Signature Algorithm" EC-DSA oder "public-Diffie-Hellman-Key-Algorithmus" -Verfahren gebildet und/oder freigegeben, hat man gängige und somit erprobte Ansätze in Gebrauch, die die Vorteile der Erfindung gewährleisten können.

Gemäß der Erfindung wird ein zu schützendes Gerät mit einer Funktion zur asymmetrischen kryptographischen Geräteauthentisierung ausgestaltet.

Vorzugsweise verwendet das Gerät ein Public/Private-Schlüsselpaar (Geräteauthentisierungsschlüssel). Dabei wird der private Schlüssel des Public/Private-Schlüsselpaars bei der Durchführung einer Geräteauthentisierungsfunktion durch das Gerät verwendet. Der zugeordnete öffentliche Schlüssel des Public/Private-Schlüsselpaars kann durch das Gerät für eine Überprüfung der erfolgten Geräteauthentisierung bereitgestellt werden.

Ein Vorteil eines asymmetrischen kryptographischen Geräteauthentisierung mittels Geräteschlüssel besteht darin, dass diese bei erfindungsgemäßen Weiterbildungen zur Authentisierung in einem Kommunikationsprotokoll wie z.B. TLS oder IKEv2/IPsec, zur Ausstellung einer kryptographisch geschützten Bestätigung (Attestation, z.B. Attestierung der Geräteintegrität oder des geladenen Software-Stands), zur Authentisierung eines Audit-Logs bzw. von Audit-Log-Einträgen, zum geschützten Einrichten einer Kommunikationsbeziehung (Pairing, z.B. bei Bluetooth oder WLAN), zur geschützten Anforderung eines Zertifikats (Certificate Signing Request, CSR) oder zum geschützen Geräte-Onboardings bei einem Backend-System (IoT-Backend), verwendet werden kann.

Ein weiterer vorteilhafter Ansatz der Erfindung liegt in der erfindungsgemäßen Behandlung eines Tamper-Events durch ein als Teil einer Maschine vorgesehenen eingebetteten Steuerungssystem, als IoT-Gerät oder als Steuergerät ausgestalteten und betriebenen Feldgerätes: Ein GeräteAuthentisierungsschlüssel wird bei einem Tamper-Ereignis, d.h. der Detektion eines Manipulationsversuchs, nicht wie im Stand der Technik dauerhaft gelöscht (Zeroization), sondern er wird aktualisiert, insbesondere wird ein neuer Geräteschlüssel bzw. ein neues Geräteschlüsselpaar generiert oder aktiviert. Dadurch kann das Gerät auch nach einem Tamper-Event noch geschützt authentisiert werden.

Erfindungsgemäß wird dabei kryptographisch sichergestellt, dass nach einem Tamper-Event gemäß Weiterbildung eine unterschiedliche Geräteauthentisierung erfolgt. Dadurch kann das Gerät insbesondere keine Logdaten oder Attestierungen unbemerkt ändern, die vor dem Tamper-Ereignis mit dem alten Geräteschlüssel signiert wurden. Auch kann sich ein Gerät nach einem erfolgten Tampering nicht mehr als ungetampertes Gerät authentisieren.

Die Tatsache, dass ein Tampering stattgefunden hat, ist anhand des geänderten Geräteauthentisierungsschlüssels verlässlich erkennbar.

Der neue Geräteauthentisierungsschlüssel, der insbesondere als Public Key eines Schlüsselpaares ausgestaltet ist, kann gemäß einer weiteren Weiterbildung in einem sicheren Audit-Log-Eintrag des Gerätes enthalten sein, der mit dem bisherigen Geräteschlüssel überprüfbar ist. D.h. die Information zu dem neuen Geräteschlüssel ist als Logeintrag enthalten, der mit dem alten Geräteschlüssel geschützt, insbesondere digital signiert, ist.

Vorteilhaft weitergebildet ist die Erfindung, in dem ein Tamper-Event z.B. durch einen Gehäuseschalter, einen Tampersensor (Strahlungssensor, Näherungssensor, Berührungssensor, Erschütterungssensor, Eindringsensor, Lagesensor, Bohrschutzfolie) oder durch einen Benutzer-betätigbaren Tamper-Schalter (Löschtaste, Rücksetztaste) oder ein Tamper-Kommando erkannt werden kann.

Alternativ oder ergänzend kann ein Tampering erfindungsgemäß erkannt werden, indem die Integrität von Daten überprüft wird (Konfigurationsdaten, Programmcode) oder die Laufzeitintegrität (laufende Prozesse/Tasks). Bei einer weiteren Weiterbildung wird ein Versiegeln oder ein Entsiegeln einer Gerätekonfiguration über ein Kommando oder einen Betriebsartenstecker oder einen Betriebsartenschalter als Trigger der Behandlung eines Tamper-Ereignises genutzt werden. Alternativ oder ergänzend wird ein Aktivieren eines Konfigurationsmodus als ein Tamper-Ereignis im Sinne der Erfindung gewertet. Ein Versiegeln der Gerätekonfiguration kann dabei eine aktive Tamper-Überwachung aktiv schalten, ein Unseal-Kommando die Konfiguration löschen bzw. die Tamper-Überwachung inaktiv schalten.

Ein Tamper-Event im Sinne dieser Erfindung ist wie oben definiert als Manipulation, also weit gefasst, zu verstehen. Es kann sich daher wie auch allgemein um ein Ereignis handeln, das den Security-Zustand einer Zustandsmaschine des Gerätes modifiziert, d.h. eine Transition in der Zustandsmaschine (Finite State Machine) des Geräte-Security-Zustands auslöst.

Gemäß der Erfindung kann ein Gerät nach einem erkannten Tamper-Ereignis keine Logdaten mit dem bisherigen Audit-Log-Schlüssel mehr erzeugen, der bis zu dem Tamper-Ereignis gültig war. Gemäß der Weiterbildung der Erfindung kann es jedoch weitere Audit-Log-Daten mit dem neuen, aktualisierten Schlüssel erzeugen, insbesondere digital signieren. Funktionen des Gerätes, insbesondere im eingebetteten System, können damit zumindest teilweise fortgeführt werden, und aufgrund der Nachvollziehbarkeit des Schlüsselwechsels unter Berücksichtigung von Effekten der Manipulation erfolgen.

Weiterhin kann das Gerät vorteilhafter Weise nach einem Tamper-Ereignis (Tamper-Event) sich nicht mehr mit dem bisherigen Schlüssel gegenüber einem Kommunikationspartner authentisieren, mit dem es sich bis zu einem Tamper-Event authentisiert hat. Dadurch ist sichergestellt, dass ein "getampertes", manipuliertes Gerät von einem Kommunikationspartner nicht versehentlich als gültig akzeptiert wird und den Kommunikationspartner bzw. das System kompromittieren kann. Erst wenn der neue Schlüssel des Gerätes, der nach dem Tampern aktiv ist, eingerichtet worden ist, kann eine Kommunikation wieder gültig werden.

Durch die Erfindung und deren Weiterbildungen wird somit ein flexibles, aber dennoch sicheres Behandeln eines Tamper-Ereignisses eines Gerätes ermöglicht. Das Gerät wird insbesondere durch ein Tamper-Ereignis nicht dauerhaft unbrauchbar, sondern kann nach einen Tamper-Ereignis noch sicher weiterverwendet werden, allerdings zumindest eingeschränkt; nach einem Tamper-Event kann z.B. lediglich das Logging weiter funktionieren, wobei zumindest teilweise eine Hauptfunktionalität des Gerätes dauerhaft, d.h. bis zum Abschluss der Behandlung des Events bzw. Wiedereinrichtung der vollständigen Funktion durch berechtigtes Kreise, gesperrt ist.

Weitere Vorteile und Einzelheiten der Erfindung werden nun ausgehend von den in den einzigen Figuren dargestellten Ausführungsbeispielen der Erfindung näher erläutert. Dabei zeigt die
- Figur 1: schematisch ein als Feldgerät ausgestaltetes Ausführungsbeispiel der erfindungsgemäßen Anordnung,
- Figur 2: schematisch ein Ablaufdiagramm eines Ausführungsbeispiels des erfindungsgemäßen Verfahrens.

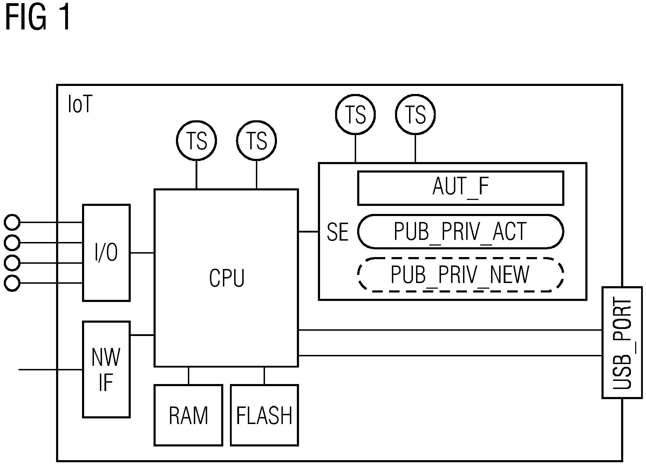

Die Figur 1 zeigt ein Ausführungsbeispiel der erfindungsgemäßen Anordnung in Ausgestaltung als ein Feldgerät IoT.

Zu erkennen ist, dass dieses mit einer Ein-/Ausgabeschnittstellen aufweisenden Ein/Ausgabeeinheit I/O, einer Netzwerkschnittstelle NW IF und einem USB-Port USB als Konfigurationsschnittstelle, ausgestaltet ist.

Es umfasst ferner eine Recheneinheit CPU, beispielsweise einen Mikrocontroller, ein so genanntes "System on Chip" oder ein so genanntes "Field Programmable Gate Array" (FPGA), welche mit einem Arbeitsspeicher RAM und einem Programm-/Konfigurationsspeicher FLASH verbunden sind.

Weiterhin umfasst das Ausführungsbeispiel des Feldgeräts IoT ein Secure Element SE, z.B. ein Smart-Card-basiertes Hardware Security-Modul. Es sind mehrere Tamper-Sensoren TSₙ vorgesehen, die mit der Recheneinheit CPU bzw. dem Secure Element SE verbunden sind.

Das Secure Element SE ist gemäß Beispiel derart ausgestaltet, dass es zumindest eine Authentifizierungsfunktion AUT_F bereitstellt. Dabei kann es sich insbesondere um die Berechnung einer digitalen Signatur, z.B. gemäß RSA, PKCS#1, DSA, ECDSA oder um das Durchführen eines Authentisierung- und Schlüsselvereinbarungsprotokolls, z.B. authenticated Diffie-Hellman Key Agreement, IKEv2 Authentication and Key Agreement oder ein TLS Authentication and Key Agreement, handeln. Ferner ist zu erkennen, dass das Secure Element SE gemäß Ausführungsbeispiel auch derart ausgestaltet ist, dass es das aktuelle Geräteschlüsselpaar PUB_PRIV_ACT erzeugt hat und im Speicher vorhält sowie zumindest ein neues Geräteschlüsselpaar PUB_PRIV_NEW erzeugen und in einem weiteren Speicherbereich des Secure Elements SE vorhalten kann, was durch die gestrichelten Linien in der Darstellung zum Ausdruck gebracht werden soll. Es ist in einer weiteren Variante (nicht dargestellt) auch möglich, dass das Secure Element SE lediglich den privaten Schlüssel K_PRIV_ACT des aktuellen Geräteschlüsselpaars PUB_PRIV_ACT bzw. den privaten Schlüssel K_PRIV_NEW des neuen Geräteschlüsselpaars PUB_PRIV_NEW speichert. Der jeweils zugeordnete kann z.B. auf der CPU bzw. im verbundenen FLASH-Speicher gespeichert sein oder dieser von dem Secure Element SE bereitgestellt werden.

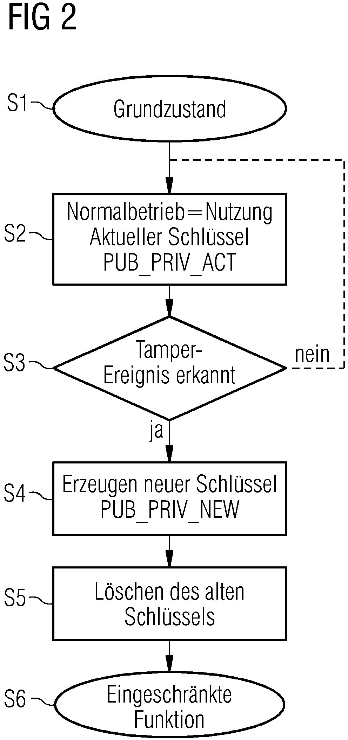

Ausgehend von diesem Ausführungsbeispiel der erfindungsgemäßen Anordnung soll ein in Figur 2 gezeigtes Ausführungsbeispiel des erfindungsgemäßen Verfahrens erläutert werden.

Figur 2 zeigt schematisch ein Ablaufdiagramm eines Ausführungsbeispiels des erfindungsgemäßen Verfahrens, bei dem ausgehend von einem gemäß der Erfindung als ersten Schritt S1 betrachteten Grundzustand, in dem das Secure Element SE einen Geräteschlüssel (Credential, cred), beispielsweise als das im Ausführungsbeispiel der Anordnung beschriebene aktuelle Geräteschlüsselpaar PUB_PRIV_ACT, bestehend aus einen geheimen bzw. privaten und einen zugeordneten öffentlichen Geräteschlüssel, evtl. selbst erzeugt hat und vorhält. Dieser Schlüssel wird in einem durch einen als zweiter Schritt S2 bezeichneten einen Normalbetrieb kennzeichnenden Zustand unter anderem für eine Geräteauthentisierung verwendet.

Dies kann über das im Ausführungsbeispiel der Anordnung beschriebene Modul für das Authentisieren AUT_F des Secure Elements SE erfolgen, durch das das Internet of Things Gerät IoT sich authentisieren kann. In einer anderen Variante kann das Modul für das Authentisieren AUT_F des Secure Elements SE einen von der CPU bereitgestellten Logeintrag oder dessen Hash-Wert digital signieren.

Es ist alternativ ebenso möglich, dass die Funktionalität des Secure Elements SE auf der Recheneinheit CPU realisiert ist und in dem zweiten Schritt S2 durchgeführt wird, beispielsweise in der Art einer so genannten ARM TrustZone, oder als separater Prozess bzw. Task eines Betriebssystems oder als virtuelle Maschine, die durch einen, auch als auch Virtual-Machine-Monitor VMM bekannten, Hypervisor separiert ist.

In einem dritten Schritt S3, bei dem ein Tamper-Event, das mittels eines der Tamper-Sensoren TSₙ erkannt wird, beispielsweise durch das Secure Element SE selbst oder durch ein Signal oder ein Kommando der Recheneinheit CPU an das Secure Element SE, aktualisiert das Secure Element SE in einem vierten Schritt S4 den Authentisierungsschlüssel. Das bedeutet, dass ein neues Geräteschlüsselpaar PUB PRIV NEW erzeugt oder zumindest ein vorhandenes für die Benutzung freigegeben wird. Das bisherige Geräteschlüsselpaar PUB_PRIV_ACT wird in einem fünften Schritt S5 gelöscht oder zumindest gesperrt.

Dadurch kann sich das Gerät IoT in einem als sechsten Schritt S6 bezeichneten Post-Tamper-Ereignis kennzeichnenden Zustand eingeschränkter Funktionalität zwar weiterhin authentisieren, aber nicht mehr auf die gleiche Art wie vor dem Tamper-Ereignis. Dadurch ist sichergestellt, dass ein Kommunikationspartner des Gerätes IoT, beispielsweiseein Netzwerkknoten, der über die Netzwerkschnittstelle NW IF erreichbar ist, oder ein Service-Rechner, der Audit-Log-Daten über die USB-Schnittstelle USB ausliest, das Gerät versehentlich als das bisherige, nicht getampertes Gerät authentisiert.

Die Erfindung ist nicht auf die beschriebenen Beispiele beschränkt, so umfasst es alle Kombinationen einzelner oder aller genannten Ausgestaltungsvarianten, die durch die Ansprüche abgedeckt sind, und vor allem das Merkmal enthalten, dass das Internet of Things Gerät IoT bei einem Tamper-Ereignis ein neues Schlüsselpaar eines asymmetrischen kryptographischen Algorithmus wie beispielsweise RSA; DSA, EC-DSA oder public Diffie-Hellman-Key, erzeugt oder einen bereitgehaltenen freigibt. Das erfindungsgemäße Verfahren kann mehrfach wiederholt werden. Das bedeutet, dass bei einem weiteren Tamper-Ereignis ein weiteres Schlüsselpaar erzeugt oder der private Schlüssel des erzeugten oder eines vorbereiteten Schlüsselpaars oder der öffentliche Schlüssel des erzeugten oder eines vorbereiteten Schlüsselpaars freigegeben wird.

Auch sind Weiterbildungen umfasst, bei dem das Gerät IoT ferner auch so ausgestaltet ist, dass es seinen public Key als Geräteidentität über eine Schnittstelle bereitstellt und/oder so weitergebildet ist, dass es beispielsweise als ein Feldgerät, ein Steuergerät, ein intelligenter Sensor, ein intelligenter Aktuator, ein Erweiterungsmodul (Extension Shield), ein Ansteckmodul (IO-Modul, Kommunikationsprozessor), ein CPU-Modul ausgestaltet ist. Hierdurch kann die jeweilige erfindungsgemäße Ausgestaltung des Geräts IoT allein und/oder in Kombination mit den anderen Ausgestaltungen, insbesondere in eingebetteten Systemen den Manipulationsschutz massiv erhöhen.

## Patentansprüche

1. Verfahren zum Schutz gegen Manipulationen eines zumindest ein erstes gemäß asymmetrischem Verschlüsselungsverfahren zur verschlüsselten Kommunikation und/oder Authentisierung erzeugten Schlüsselpaar nutzenden Gerätes, **dadurch gekennzeichnet, dass**
a) das Gerät funktional mit mindestens einer Einrichtung zur Erfassung eines Manipulationsversuchs verbunden ist und betrieben wird, und
b) das Gerät bei Erfassen eines Manipulationsversuchs, zumindest ein Schlüssel, insbesondere der private Schlüssel, des ersten Schlüsselpaares durch einen neuen Schlüssel ersetzt.

2. Verfahren nach dem vorhergehenden Anspruch, **dadurch gekennzeichnet, dass** dieser Eintrag mit dem privaten Schlüssel des ersten Schlüsselpaars digital signiert gespeichert wird.

3. Verfahren nach dem vorhergehenden Anspruch, dass der neue Schlüssel als Eintrag, insbesondere als Audit-Log- Eintrag oder Konfigurationsspeichereintrag, im Gerät gespeichert vorgehalten und bei Erfassen des Manipulationsversuches ausgelesen wird.

4. Verfahren nach einem der vorhergehenden Ansprüche, dass der neue Schlüssel bei Erfassen des Manipulationsversuches generiert wird.

5. Verfahren nach einem der vorhergehenden Ansprüche, **dadurch gekennzeichnet, dass** die Einrichtung als Sensor, insbesondere Gehäuseschalter, Strahlungssensor, Näherungssensor, Berührungssensor, Erschütterungssensor, Lagesensor, Eindringsensor und/oder Bohrschutzfolie, betrieben wird.

6. Verfahren nach einem der vorhergehenden Ansprüche, **dadurch gekennzeichnet, dass** die Einrichtung als Überwachung mindestens einer Mensch-Maschine-Schnittstelle, insbesondere Taste oder Schalter, vorzugsweise, mit besonderer Funktion wie Lösch- oder Rücksetztaste, Betriebsartenstecker, Betriebsartenschalter und/oder Kommandointerpreter, betrieben wird.

7. Verfahren nach einem der vorhergehenden Ansprüche, **dadurch gekennzeichnet, dass** als Einrichtung eine Integrität von mit der Gerätefunktion korrelierender Größen, insbesondere von Daten, wie Konfigurationsdaten, Programmcode, und/oder von Laufzeiten, wie Prozess- und/oder Tasklaufzeiten, verifiziert wird.

8. Verfahren nach einem der vorhergehenden Ansprüche, **dadurch gekennzeichnet, dass** die Schlüssel in einer, insbesondere nach Art eines Secure-Elements, zugriffssicheren, zumindest temporär in dem Gerät integrierten Einrichtung gespeichert wird.

9. Verfahren nach einem der vorhergehenden Ansprüche, dass die Schlüssel des ersten und/oder neuen Schlüsselpaares gemäß einem "Rivest, Shamir und Adleman" - RSA, "Digital Signature Algorithm", - DSA, "Elliptic Curve Digital Signature Algorithm" EC-DSA oder "public-Diffie-Hellman-Key-Algorithmus" -Verfahren gebildet und/oder freigegeben werden.

10. Netzwerkeinrichtung, insbesondere in der Art des "Internet of Things", vorzugsweise als Feldgerät, Steuergerät, intelligenter Sensor, intelligenter Aktuator, Erweiterungsmodul, Ansteckmodul oder CPU-Modul, **gekennzeichnet durch** Mittel zur Durchführung des Verfahrens nach einem der Ansprüche 1 bis 9.
